(19) Europäisches Patentamt European Patent Office Office européen des brevets

(11) EP 4 787 066 A1

(12) EUROPEAN PATENT APPLICATION

(43) Date of publication:
05.08.2026 Bulletin 2026/32

(21) Application number: 26152618.0

(22) Date of filing: 19.01.2026

(51) International Patent Classification (IPC):
G02F 1/1335 (2006.01)   G02F 1/13357 (2006.01)

(52) Cooperative Patent Classification (CPC):
G02F 1/133601; G02B 27/0101; G02F 1/133605;
G02F 1/133615; G02B 2027/0112

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.02.2025 US 202519044996

(71) Applicant: Distance Technologies Oy
00530 Helsinki (FI)

(72) Inventors:
• Savolainen, Petri
00530 Helsinki (FI)
• Konttori, Urho
00530 Helsinki (FI)
• Strandborg, Mikko
00530 Helsinki (FI)
• Juhola, Mikko
00530 Helsinki (FI)

(74) Representative: Moosedog Oy
Kurjenmäenkatu 10 B 49
20700 Turku (FI)

(54) **LASER-BASED DISPLAY HAVING CONTROLLABE LIGHT GUIDE**

(57) A display device (100) comprises a laser light source(s), an active panel (104) comprising a liquid crystal (LC) layer (120), and light guide(s) (106). The light guide(s) comprise a light outlet (116) comprising a plurality of exit portions (112), to send the light rays towards the active panel. The light guide(s) are controllable to sequentially guide light rays emitted by the laser light source(s) towards different exit portions of the light outlet. A pixel (or a group of pixels) of an image is displayed, by:

(i) determining a corresponding exit portion of the light outlet, (ii) controlling the laser light source(s) to emit the light rays; (iii) controlling the light guide(s) to guide the light rays towards the corresponding exit portion from which the light rays exit towards a corresponding LC cell (110a) (or a corresponding group of LC cells) of the LC layer; and (iv) controlling the corresponding LC cell to modulate an intensity of the light rays passing therethrough.

FIG. 1B

EP 4 787 066 A1

**Description**

TECHNICAL FIELD

The present disclosure relates to display devices having controllable light guides. The present disclosure also relates to systems for displaying images, employing such display devices. The present disclosure further relates to methods for displaying images, employing such display devices.

BACKGROUND

Heads-up displays (HUDs) that project images on vehicle windshields or other windows need to work in various lighting conditions, for example, ranging from direct sunlight to dimly-lit night conditions. An especially challenging situation is when an outdoor lighting condition is very bright (for example, when an average intensity of ambient light lies in a range of 10000 lux to 25000 lux). In such challenging situations, a conventional liquid crystal display (LCD) based HUD may not be capable of achieving brightness levels that can produce a legible image. This problem is exacerbated when an area on which images are projected is relatively large (for example, when a field of view of said area lies in a range of 20 degrees x 20 degrees to 60 degrees x 25 degrees, or even more). This is because in such situations, a limited number of photo-emitting cells in the LCD based HUD are utilised to display the images on a relatively larger area, which means that light produced by a single pixel has to cover a relatively larger pixel area, thereby reducing an overall brightness of the displayed images.

To add to this, in case of 3D HUDs, where a light field display unit comprises a multiscopic optical element (for example, such as a parallax barrier, a lenticular array, an array of liquid crystal lenses, or similar) for producing an autostereoscopic effect, the overall brightness of displayed images is further reduced. This overall brightness is even further reduced in cases where there are multiple users. Combined with the challenges of a conventional LCD based HUD, such multiscopic optical elements may not allow to achieve sufficient brightness levels that can produce legible images. This may be even more problematic when a dark visual scene is required to be presented.

It is well known that low brightness levels can make it difficult for users to discern visual details and perceive colours in the displayed images. This can lead to eyestrain and reduced usability, as users may struggle to perceive a 3D visual scene.

Therefore, in light of the foregoing discussion, there exists a need to overcome the aforementioned problems.

SUMMARY

The present disclosure seeks to provide a display device, a system and a method for facilitating high-quality autostereoscopy and multiscopy, even in bright outdoor lighting conditions and even with a relatively wide field of view (for example, in a range of 20 degrees x 20 degrees to 60 degrees x 25 degrees, or more). The aim of the present disclosure is achieved by a display device in which at least one light guide is controlled to sequentially guide high-intensity light rays emitted by at least one laser light source towards different exit portions of a light outlet, from which these high-intensity light rays exit towards corresponding liquid crystal (LC) cells or corresponding groups of neighbouring LC cells of an LC layer in an active panel, as well as a system and a method for displaying images, by employing such a display device, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

BRIEF DESCRIPTION OF THE DRAWINGS

FIGs. 1A and 1B are simplified exploded views of a display device, while FIGs. 1C and 1D are a front view and a bottom view of the display device, respectively, in accordance with an embodiment of the present disclosure;

FIG. 1E depicts another implementation of the display device, in accordance with an embodiment of the present disclosure;

FIG. 1F depicts a specific implementation of the display device, in accordance with an embodiment of the present disclosure;

FIG. 2 depicts an exemplary environment in which a system for displaying images can be employed, in accordance with an embodiment of the present disclosure; and

FIG. 3 depicts steps of a method for displaying images, in accordance with an embodiment of the present disclosure.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a display device comprising:

at least one laser light source;

an active panel comprising:

a liquid crystal (LC) layer comprising a plurality of LC cells;

a linear polarizer arranged on an optical path of the LC layer; and

a drive circuit employed to individually control the plurality of LC cells of the LC layer;

at least one light guide comprising a light inlet and a light outlet, the light outlet comprising a plurality of exit portions, wherein the light inlet is arranged to receive light rays emitted by the at least one laser light source, wherein the at least one light guide is controllable to sequentially guide the light rays towards different exit portions of the light outlet, and the light outlet is arranged to send the light rays towards an inlet surface of the active panel; and

a processor configured to:

receive an image to be displayed via the display device; and

display the image via the display device for producing a synthetic light field, wherein when displaying the image, the processor is configured to display a given pixel or a given group of neighbouring pixels of the image by:

(i) determining a given exit portion of the light outlet corresponding to the given pixel or the given group of neighbouring pixels, based on a location of the given pixel or the given group of neighbouring pixels in the image;

(ii) controlling the at least one laser light source to emit light rays for the given pixel or the given group of neighbouring pixels in the image;

(iii) controlling the at least one light guide to guide the light rays towards the given exit portion from which the light rays exit towards a corresponding LC cell or a corresponding group of neighbouring LC cells of the LC layer in the active panel; and

(iv) controlling the corresponding LC cell or the corresponding group of neighbouring LC cells using the drive circuit to modulate an intensity of the light rays passing therethrough, based on a polarization orientation of the linear polarizer.

In a second aspect, an embodiment of the present disclosure provides a method comprising:

receiving an image to be displayed via a display device, the display device comprising at least one laser light source, an active panel and at least one light guide, wherein the active panel comprises a liquid crystal (LC) layer comprising a plurality of LC cells, a linear polarizer arranged on an optical path of the LC layer, and a drive circuit employed to individually control the plurality of LC cells of the LC layer, and wherein the at least one light guide comprises a light inlet and a light outlet, the light outlet comprising a plurality of exit portions, the light inlet being arranged to receive light rays emitted by the at least one laser light source, wherein the at least one light guide is controllable to sequentially guide the light rays towards different exit portion of the light outlet, the light outlet being arranged to send the light rays towards an inlet surface of the active panel; and

displaying the image via the display device for producing a synthetic light field, wherein the step of displaying the image comprises displaying a given pixel or a given group of neighbouring pixels of the image by:

(i) determining a given exit portion of the light outlet corresponding to the given pixel or the given group of neighbouring pixels, based on a location of the given pixel or the given group of neighbouring pixels in the image;

(ii) controlling the at least one laser light source to emit light rays for the given pixel or the given group of neighbouring pixels in the image;

(iii) controlling the at least one light guide to guide the light rays towards the given exit portion from which the light rays exit towards a corresponding LC cell or a corresponding group of neighbouring LC cells of the LC layer in the active panel; and

(iv) controlling the corresponding LC cell or the corresponding group of neighbouring LC cells using the drive circuit to modulate an intensity of the light rays passing therethrough, based on a polarization orientation of the linear polarizer.

The present disclosure provides the aforementioned display device and the aforementioned method that are capable of producing high brightness suitable for autostereoscopic and multiscopic display purposes. Such high brightness is achieved by a synergistic combination of the at least one laser light source and the at least one light guide. Notably, the at least one laser light source is employed to emit light rays for a single pixel or a single group of neighbouring pixels (of the image) at a given time instant, while the at least one light guide is employed to direct these light rays towards a corresponding LC cell or a corresponding group of neighbouring LC cells of the LC layer in the active panel, via a corresponding exit portion of the light outlet. The aforesaid steps (i) to (iv) are repeated for individual ones of a plurality of pixels in the image, or for individual ones of a plurality of groups of neighbouring pixels in the image. In other words, an entirety of a light output of the at least one laser light source is employed to light up a single pixel or a single group of neighbouring pixels at a given time instant. As a result, each pixel or each group of neighbouring pixels, when lighted up at a corresponding time instant, contributes towards producing a highly-bright synthetic light field. This allows for presenting virtual content legibly, even in bright outdoor lighting conditions (for example, when the average intensity of ambient light lies in a range of 10000 lux to 25000 lux) and even with a relatively wide field of view (for example, in a range of 20 degrees x 20 degrees to 60 degrees x 25 degrees, or even more).

Pursuant to the present disclosure, the aforementioned display device is suitable to be implemented in a heads-up display (HUD). However, it will be appreciated that the aforementioned display device is not limited to be implemented in an HUD only, and can also be implemented for other types of displays. Examples of the other types of displays include, but are not limited to, infotainment displays (for example, such as dashboard or rear-seat screens in vehicles for entertainment, navigation, or system control), instrument clusters (for example, such as digital or hybrid instrument panels showing speed, fuel levels, and other vehicle metrics), augmented-reality (AR) glasses, extended-reality (XR) headsets, smartphone displays, interactive kiosks, digital signage, medical imaging displays, and wearable devices (for example, such as displays on smartwatches, fitness trackers, or other personal devices).

In a third aspect, an embodiment of the present disclosure provides a system comprising:

a display device according to the aforementioned first aspect;

an optical combiner arranged on an optical path of the display device and on an optical path of a real-world light field of a real-world environment; and

at least one processor configured to:

generate or retrieve an image to be displayed via the display device; and

send the image to be displayed to the display device,

wherein the display device is employed to display the image for producing a synthetic light field, and wherein the optical combiner is employed to reflect the synthetic light field towards eyes of at least one user, whilst optically combining the real-world light field with the synthetic light field.

The present disclosure also provides the aforementioned system employing the aforementioned display device. This makes the system suitable to be implemented as an HUD. In this regard, the system may be implemented as a two-dimensional (2D) HUD or a three-dimensional (3D) HUD. The system is capable of producing a highly-bright synthetic light field, due to the synergistic combination of the at least one laser light source and the at least one light guide of the aforementioned display device, as explained above. This allows for presenting virtual content legibly, even in bright outdoor lighting conditions (for example, when the average intensity of ambient light lies in a range of 10000 lux to 25000 lux) and even with a relatively wide field of view (for example, in a range of 20 degrees x 20 degrees to 60 degrees x 25 degrees, or even more). As a result, it minimises eyestrain and enhances the system's usability, allowing users to effortlessly perceive 3D visual scenes displayed by the system.

For illustration purposes, there will now be described how various components of the aforementioned display device can be implemented. The processor controls an overall operation of the display device. The processor is communicably coupled to the at least one laser light source, the at least one light guide and the drive circuit of the active panel. The processor can be implemented as any one of: a microprocessor, a controller, a microcontroller. As an example, the processor can be implemented as a reduced instruction set computer (RISC) microprocessor, an application-specific integrated circuit (ASIC) microprocessor, or similar.

It will be appreciated that the at least one laser light source can be implemented in various ways that are well-known in the art. For brevity, some of the various ways will now be described only briefly, without limiting the at least one laser light source to such implementations only. In a first example implementation, the at least one laser light source can be implemented as a combination of lasers of primary colours, to produce white light by additive mixing of the primary colours. As an example, separate lasers of red, green and blue wavelengths (for example, such as 640 nm, 532 nm, and 445 nm, or similar) can be employed to produce white light. Light rays emitted by these separate lasers can be mixed using dichroic mirrors or an optical waveguide. A technical benefit of such an implementation is that brightness and colour balance of a light output can be controlled electronically, thereby allowing for colour purity and tunability for sharp and vivid images. Such an implementation also allows for a compact and lightweight design, which is achievable with miniaturized components. Moreover, the separate lasers can be implemented to interface with the at least one light guide directly, namely without a need for any other optical element. This allows for a simple, yet robust implementation of the display device.

In a second example implementation, the at least one laser light source can be implemented as a laser-excited phosphor, wherein a blue laser or an ultra-violet (UV) laser excites a phosphor material to produce white light. Such an implementation allows for a compact optical design, which is critical for space-constrained environments, for example such as HUDs. Moreover, such an implementation is capable of producing high brightness suitable for daylight visibility, whilst also providing a long operational life and robustness against vibrations and temperature fluctuations.

In a third example implementation, the at least one laser light source can be implemented as a pulsed laser, wherein white light is generated by passing light rays emitted by the pulsed laser through a non-linear medium. Such an implementation is also referred to as supercontinuum generation. The pulsed laser can be implemented as a compact, ultrafast pulsed laser (for example, such as a femtosecond laser). The non-linear medium can be implemented as a photonic crystal fibre. In such an implementation, the light output can be optically filtered for precise control of the white light. Such an implementation is also capable of producing high brightness with a uniform spectral coverage that is suitable for displaying full-colour images, whilst allowing for a compact design that is feasible with modern laser and fibre technologies. Moreover, such an implementation also has high durability and adaptability for harsh automotive conditions.

In a fourth example implementation, the at least one laser light source can be implemented as a plurality of laser diodes, which are integrated together to emit multiple different wavelengths to produce white light. As an example, red, green, and blue laser diodes can be combined into a single optical assembly. Such an implementation allows for adjustable colour balance for vivid and realistic images, whilst producing high brightness suitable for daylight HUD visibility. Moreover, such an implementation also allows for a compact and energy-efficient design tailored for HUDs.

Throughout the present disclosure, the term "active panel" refers to a LC-based panel. The LC layer of the active panel is encased between a first substrate and a second substrate. At least one first electrode is deposited on the first substrate and disposed between the LC layer and the first substrate, while a plurality of second electrodes are deposited on the second substrate and disposed between the LC layer and the second substrate. The drive circuit comprises electronic circuit components for controlling respective ones of the plurality of LC cells. These electronic circuit components could be implemented as at least one of: thin-film transistor (TFT) switches, metal-oxide-semiconductor field-effect transistor (MOSFET) switches, programmable resistors, programmable inductors, programmable capacitors. The electronic circuit components are electrically connected to respective ones of the plurality of second electrodes. Each LC cell has a respective electronic circuit component that controls a voltage applied to a respective one of the plurality of second electrodes. The at least one first electrode could be electrically connected to an electrical ground or a common electrical plane.

In some implementations, the at least one laser light source is configured to emit the light rays having a polarization orientation that is different from the polarization orientation of the linear polarizer. In such implementations, the aforesaid step (iv) of controlling the corresponding LC cell (or the corresponding group of neighbouring LC cells) to modulate the intensity of the light rays is performed by taking into consideration a difference between the polarization orientation of the light rays and the polarization orientation of the linear polarizer.

It will be appreciated that light rays emitted by laser light sources are typically already polarized. One example of such laser light sources is semiconductor lasers (for example, such as laser diodes). In such an example, the at least one laser light source can be configured to emit the light rays having the polarization orientation that is different from the polarization orientation of the linear polarizer. Various ways to perform such configuring are well-known in the art.

It will be appreciated that a technical benefit of configuring the at least one laser light source to emit the light rays having the polarization orientation that is different from the polarization orientation of the linear polarizer is that an overall brightness of the display device is enhanced, as compared to an alternative implementation where another linear polarizer is arranged to polarize unpolarized light rays. This is because when the unpolarized light rays pass through the another linear polarizer, almost 50 percent of the brightness is lost. However, when the light rays emitted by the at least one laser light source are already polarized, there is no need to employ the another linear polarizer.

In other implementations, the active panel further comprises another linear polarizer having another polarization orientation that is different from the polarization orientation of the linear polarizer, and wherein the LC layer is arranged between the linear polarizer and the another linear polarizer. Accordingly, the aforesaid step (iv) is performed by taking into consideration a difference between the another polarization orientation of the another linear polarizer and the polarization orientation of the linear polarizer. It will be appreciated that in such implementations, various components of the display device may be arranged (along the optical path) as follows:

laser light source -> light guide -> another linear polarizer ->

LC layer -> linear polarizer

Moreover, optionally, the active panel further comprises a colour filter array (CFA) comprising colour filters of at least three different colours. In this regard, the LC cells of the LC layer correspond to sub-pixels of a plurality of pixels. Optionally, in such a case, the at least one laser light source is controlled to emit the light rays of no specific colour or intensity, namely white light. In this regard, the CFA is employed to filter the light rays to produce coloured light rays, while the corresponding LC cell (or the corresponding group of neighbouring LC cells) of the LC panel is controlled to modulate the intensity of the light rays passing therethrough.

It will be appreciated that the CFA can be arranged anywhere on the optical path after the at least one light guide. Optionally, the CFA is arranged adjacent to the LC layer, between the LC layer and the linear polarizer. By "adjacent", it is meant that there is a negligible gap between the CFA and the LC layer. A technical benefit of such an arrangement of the CFA is that there is no sub-pixel light leakage in the display device. This eliminates crosstalk (between sub-pixels and pixels), thereby eliminating any ghosting artefacts.

Additionally or alternatively, optionally, the at least one laser light source is controlled, based on colour values of the given pixel or the neighbouring pixels of the given group in the image, to emit the light rays having the colour values of the given pixel or the neighbouring pixels of the given group. Throughout the present disclosure, the phrase "light rays having the colour values of the given pixel or the neighbouring pixels of the given group" refers to light rays of a given colour that corresponds to the colour values of the given pixel or the neighbouring pixels of the given group. As an example, separate red, green and blue lasers can be controlled individually to emit light rays of the given colour. In such a case, the at least one laser light source is controlled to emit the light rays having said colour values, while the corresponding LC cell (or the corresponding group of neighbouring LC cells) of the LC panel is controlled to modulate the intensity of the light rays passing therethrough.

A technical benefit of emitting the light rays having the colour values as an alternative to the CFA is that the light rays can have a maximum possible light intensity. Notably, when the light rays pass through the CFA, a part of the light intensity is lost due to inherent nature of the colour filters of the CFA. In other words, the colour filters allow only certain wavelengths to pass therethrough, while absorbing remaining wavelengths; such wavelength absorption leads to a reduction in the light intensity of the light rays. Therefore, producing the light rays having the colour values at the at least one laser light source is highly beneficial.

However, in certain implementations, it may be beneficial to use the CFA in addition to emitting the light rays having the colour values. Notably, in such implementations, the colour filters of the CFA can be used to fine tune colour reproduction.

Furthermore, throughout the present disclosure, the term "light guide" refers to an optical component that is configured to guide light rays received at its light inlet towards a given exit portion of its light outlet at a given time instant. The light rays then exit from the given exit portion towards a corresponding LC cell or a corresponding group of neighbouring LC cells of the LC layer. It will be appreciated that a size of the given exit portion of the light outlet of the at least one light guide may be same as or different from a size of a single LC cell of the LC layer. In some implementations, the size of the given exit portion of the light outlet is same as the size of the single LC cell. In such implementations, the light rays can be beneficially exited from the given exit portion towards the corresponding LC cell. In other implementations, the size of the given exit portion of the light outlet is different from the size of the single LC cell. In such implementations, the size of the given exit portion of the light outlet may be same as a size of a single group of neighbouring LC cells. Accordingly, the light rays can be exited from the given exit portion towards the corresponding group of neighbouring LC cells. By "same" hereinabove, it is meant that said sizes are within 5 percent of each other. It will be appreciated that a given group of neighbouring LC cells is in a form of an MxN array. As an example, the MxN array can be a 1x2 array, a 2x1 array, a 2x2 array, a 2x3 array, a 3x2 array, a 3x3 array, a 3x4 array, a 4x3 array, a 4x4 array, or similar. In this way, the plurality of exit portions correspond to the plurality of pixels or the plurality of groups of neighbouring pixels of the display device, depending on the type of implementation.

As mentioned earlier, the aforesaid steps (i) to (iv) are repeated for individual ones of the plurality of pixels in the image, or for individual ones of the plurality of groups of neighbouring pixels in the image.

Notably, these steps are performed for the plurality of pixels (or for the plurality of groups of neighbouring pixels) in a sequential manner. It will be appreciated that a sequence in which the plurality of pixels (or the plurality of groups of neighbouring pixels) are considered for repeating the steps (i) to (iv) is not limited to a particular scanning pattern. Said sequence can be selected based on a predefined scanning pattern. As an example, in case of a raster scanning pattern, the pixels or the groups of neighbouring pixels can be considered in a line-by-line manner across the light outlet of the at least one light guide. As another example, in case of a Lissajous scanning pattern, the pixels or the groups of neighbouring pixels can be considered based on a sinusoidal input.

As yet another example, in case of a vector scanning pattern, the pixels or the groups of neighbouring pixels can be considered based on a geometric shape of at least one virtual object represented in the image. A technical benefit of employing the vector scanning pattern is that in a case where the at least one virtual object is represented by only a small portion of the image (namely, leaving a large remaining portion of the image empty), the image can be displayed in a time-efficient and computation-efficient manner.

In this way, the at least one light guide is controlled to guide light rays received at the light inlet towards a given exit portion of the light outlet at a given time instant. Thus, the at least one light guide is controlled effectively when the steps (i) to (iv) are repeated in quick succession for the plurality of pixels (or for the plurality of groups of neighbouring pixels). It will be appreciated that the controlling of the LC cells of the LC layer is beneficially synchronized with the controlling of the at least one light guide. This ensures that each pixel is lit at a correct moment, thereby displaying the image without any unwanted flickering effect.

In this regard, the at least one light guide can be configured to first selectively guide the light rays along a given row (or a given column), and then selectively re-guide the light rays to exit from a given exit portion that lies on the given row (or the given column). Such configuring can be implemented in various ways that are well-known in the art. For brevity, some of the various ways will now be described only briefly, without limiting the at least one light guide to such implementations only.

In one example implementation, the at least one light guide can be implemented as at least one multi-layered light guide. In such an implementation, the at least one light guide is divided into a plurality of layers that are aligned with respective ones of a plurality of rows (or a plurality of columns). By controlling at least one of: an entry point at the light inlet, an angle of incidence of the light rays at the light inlet, one or more wavelengths of the light rays, different layers of the at least one light guide can be activated at different time instants. When a given layer is activated, the light rays (upon entering the light inlet) are directed towards a corresponding row (or a corresponding column). Additionally, each row (or each column) may have a plurality of controllable microstructures (for example, such as controllable micro-mirrors, controllable micro-prisms, or similar) arranged therein. A given microstructure is controlled to re-direct the light rays to exit from a corresponding exit portion.

In another example implementation, the at least one light guide can be implemented to have an array of controllable microstructures. In such an implementation, microstructures arranged along a first direction (namely, a direction in which the light rays travel upon entering the light inlet) are controlled to direct the light rays along a second direction that is perpendicular to the first direction. Subsequently, microstructures arranged along the second direction are controlled to re-direct the light rays to exit from a corresponding exit portion.

In yet another example implementation, the at least one light guide can be implemented to have diffractive optical elements (DOE). The DOEs can be integrated within or on a surface of the at least one light guide to direct the light rays towards a given row (or a given column), based on at least one of: an angle of incidence of the light rays at the DOEs, one or more wavelengths of the light rays. Moreover, these DOEs can be controllable. Furthermore, each row (or each column) may have a plurality of controllable microstructures arranged therein, wherein a given microstructure is controlled to re-direct the light rays to exit from a corresponding exit portion. Alternatively, each row (or column) may also have controllable DOEs that are controlled to re-direct the light rays to exit from a corresponding exit portion.

In still another example implementation, the at least one light guide can be implemented to employ micro-electro-mechanical system (MEMS) elements. Such MEMS elements can be controlled to direct the light rays along a given row (or a given column), and then to re-direct the light rays to exit from a given exit portion.

Moreover, it will be appreciated that the at least one light guide can be implemented as a transparent light guide. A technical benefit of such an implementation is that it makes the display device suitable to be used as a transparent display. Such a transparent display can be integrated into a windshield or other windows of a vehicle, to facilitate an HUD, without a need for any optical combiner.

In order to implement the at least one light guide as a transparent light guide, following considerations can be taken into account:

1. Material Transparency:

The at least one light guide can be made from highly-transparent materials (for example, such as specific grades of acrylic or glass), which minimize light absorption and scattering to provide high optical clarity and visibility through the at least one light guide. Moreover, the at least one light guide can have an anti-reflective coating or polished surfaces, to enhance the transparency by reducing glare and reflection.

2. Light Extraction Mechanism:

Light guide elements (for example, such as microstructures, DOEs, MEMS elements, or similar) implemented in the at least one light guide can be designed to extract light efficiently, while minimizing visual obstruction when the at least one light guide is not actively illuminated. As mentioned earlier, such light guide elements guide the light rays to corresponding rows (or columns) and corresponding exit portions, without diffusing the light rays across an entirety of the light outlet of the at least one light guide. Moreover, the light guide elements can be designed to remain almost invisible under ambient lighting conditions to preserve optical transparency.

3. Integration with Active Panel

The at least one light guide can be designed to be thin and have minimal impact on an overall transparency when integrated into the active panel. In this regard, the at least one light guide allows ambient light to pass through, enabling clear visibility of the real-world environment therethrough.

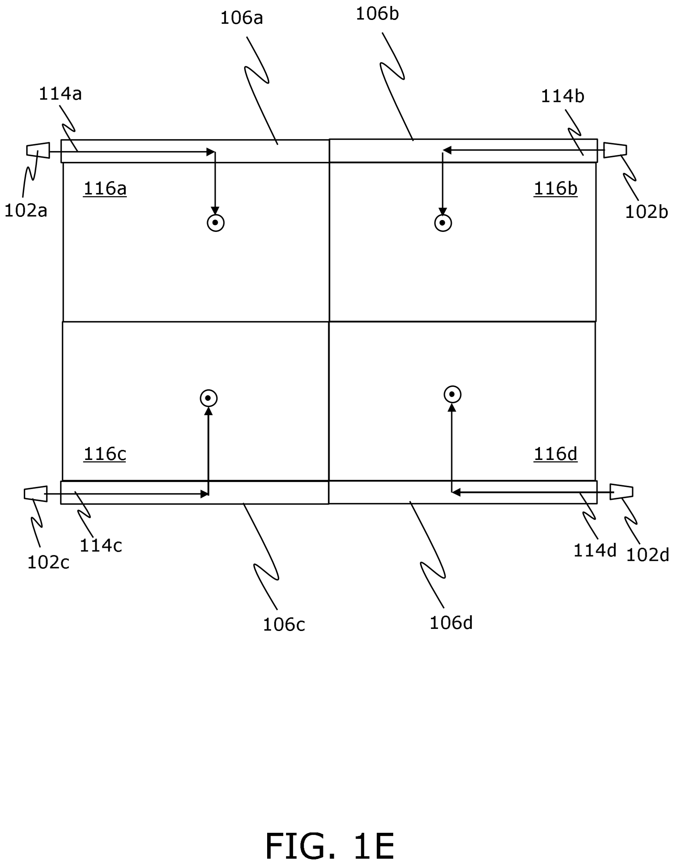

Furthermore, in some implementations, the at least one light guide is a single light guide. In such an implementation, a light outlet of the single light guide is arranged to send light rays (received at a light inlet of the single light guide) towards the inlet surface of the active panel at a given time instant. In other implementations, the at least one light guide comprises a plurality of light guides, and the at least one laser light source comprises a plurality of laser light sources corresponding to respective ones of the plurality of light guides. In such an implementation, a light inlet of each light guide is arranged to receive light rays emitted by a corresponding laser light source, and a light outlet of said light guide is arranged to send the light rays towards a corresponding portion of the inlet surface of the active panel. One such example implementation has been illustrated in conjunction with FIG. 1E. A technical benefit of having the plurality of light guides is that the image can be displayed relatively quickly, thereby allowing for higher frame rates. This immensely improves the user's viewing experience by making the visual scene more realistic and immersive.

The present disclosure also relates to the system as described above. Various embodiments and variants disclosed above, with respect to the aforementioned first aspect, apply *mutatis mutandis* to the system.

The optical combiner can be implemented as at least a part of a windshield or other windows of the vehicle. By "at least a part", it is meant that the optical combiner can also be implemented as an entirety of the windshield or the other windows. This allows the system to be implemented as an HUD in the vehicle. The optical combiner could be implemented as at least one of: a lens, a mirror, a semi-transparent mirror, a semi-transparent film, a semi-transparent flexible membrane, a prism, a beam splitter, an optical waveguide, a polarizer. Optical combiners are well-known in the art. Optionally, a tilt angle of the optical combiner with respect to the image plane of the display device lies in a range of 10 degrees and 75 degrees.

The at least one processor of the system controls an overall operation of the system. The at least one processor is communicably coupled to the display device. Optionally, the at least one processor is implemented as the processor of the display device. Alternatively, optionally, the at least one processor is implemented as a processor of a computing device that is communicably coupled to the display device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

In some implementations, the system further comprises a tracker and a multiscopic optical element arranged on the optical path of the display device, wherein the at least one processor is configured to:

determine a relative location of a first eye and of a second eye of the at least one user with respect to the optical combiner, by utilising the tracker, wherein the image is a light field image that is generated or retrieved based on the relative location of the first eye and of the second eye of the at least one user with respect to the optical combiner; and

control the multiscopic optical element, based on the relative location of the first eye and of the second eye of the at least one user with respect to the optical combiner, to direct light rays corresponding to a first set of pixels and a second set of pixels of the light field image to produce a first part and a second part of the synthetic light field, respectively, for the first eye and the second eye of the at least one user.

In some implementations, the at least one user is a single user. In other implementations, the at least one user is a plurality of users. It will be appreciated that the step of determining the relative location, the step of generating or retrieving the image, and the step of controlling the multiscopic optical element have been described with respect to an individual one of the at least one user. This means that these steps can be performed similarly for each individual one of the at least one user (including a case of the plurality of users).

Throughout the present disclosure, the term "tracker" refers to specialised equipment for detecting and/or following a location of eyes of a given user. The given user encompasses each individual one of the at least one user. Optionally, the tracker is implemented as at least one tracking camera. The at least one tracking camera may comprise at least one of: at least one visible-light camera, at least one infrared (IR) camera, at least one depth camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of a given depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera, and the at least one depth camera) may be utilised in the tracker. When different types of images captured by the various different types of tracking cameras are utilised, a location of the user's eyes can be determined highly accurately, as results obtained from one type of image can be used to refine results obtained from another type of image. Herein, these different types of images constitute tracking data collected by the tracker, and may be in the form of at least one of: visible-light images, IR images, depth images.

It will be appreciated that the at least one tracking camera is arranged to face the given user, to facilitate tracking of the location of the eyes of the given user. A relative location of the at least one tracking camera with respect to the optical combiner is pre-known. This enables to determine the relative location of the eyes of the given user with respect to the optical combiner. Optionally, in this regard, when the tracker are utilised to detect and/or follow the location of the eyes of the given user, a location of the eyes of the given user with respect to the at least one tracking camera is accurately known. Thus, the relative location of the eyes of the given user with respect to the optical combiner can be determined, based on the relative location of the at least one tracking camera with respect to the optical combiner, and the location of the eyes of the given user with respect to the at least one tracking camera. Such a determination may utilise a coordinate geometry-based technique and/or a trigonometry-based technique. It will be appreciated that in autostereoscopic and multiscopic implementations of the system, the tracker tracks the eyes of the given user with a significantly high accuracy and precision, such that an error in determining the relative location may, for example, be minimised to within a tolerance range of approximately (+/-) 8 millimetres.

As mentioned earlier, the light field image is generated or retrieved based on the relative location of the first eye and of the second eye of the at least one user with respect to the optical combiner. The light field image may be understood to be a 2D image comprising a plurality of pixels, wherein a first set of pixels from amongst the plurality of pixels is responsible for generating the first part of the synthetic light field that corresponds to the first eye of the at least one user, and a second set of pixels from amongst the plurality of pixels is responsible for generating the second part of the synthetic light field that corresponds to the second eye of the at least one user. It will be appreciated that the pixels belonging to the first set are not arranged in a continuous manner across the light field image; similarly, the pixels belonging to the second set are also not arranged in a continuous manner across the light field image. Optionally, the pixels belonging to the first set and the pixels belonging to the second set are arranged in alternating vertical stripes across a horizontal field of view of the light field image, wherein each vertical stripe comprises one or more lines of pixels. This is because humans perceive depth mainly based on horizontal binocular parallax. Thus, in this way, the light field image would be considerably different as compared to a conventional 2D image that is displayed via conventional 2D displays, because the same light field image would comprise visual information corresponding to the first eye as well as the second eye of the at least one user.

In this regard, the light field image can be generated from a first image and a second image that are to be presented to the first eye and the second eye of the at least one, respectively. In some implementations, the at least one processor is configured to generate the first image and the second image from a perspective of the relative location of the first eye and of the second eye of the at least one user with respect to the optical combiner, by employing a 3D model of at least one virtual object. It will be appreciated that the relative location of the first eye and of the second eye with respect to the optical combiner indicates a viewing direction of the first eye and a viewing direction of the second eye, respectively. Therefore, the first image and the second image are generated based on these viewing directions. Hereinabove, the term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, and a virtual information. The term *"three-dimensional model"* of the at least one virtual object refers to a data structure that comprises comprehensive information pertaining to the at least one virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar. In other implementations, the at least one processor is configured to obtain the first image and the second image in a form of 2D user interface (UI) elements. The 2D UI elements could pertain to, for example, a virtual navigation tool, a virtual gadget, a virtual message, a virtual entity, a virtual entertainment media, a virtual information, or similar.

In some implementations, the multiscopic optical element can be implemented as a part of the display device. In other implementations, the multiscopic optical element can be implemented as a separate element. Irrespective of whether the multiscopic optical element is implemented as a part of the display device or as a separate element, the multiscopic optical element can be implemented as a controllable lenticular array, a controllable parallax barrier, or similar. The controllable parallax barrier can be implemented as any one of: a switchable liquid crystal (LC) shutter array, a switchable LC barrier, a transparent/diffuse switchable film (for example, made of a polymer-dispersed liquid crystal (PDLC)). Controlling such multiscopic optical elements based on the relative location of the eyes is well-known in the art.

Furthermore, it will be appreciated that the at least one laser light source produces collimated light rays. Herein, the term "collimated light rays" encompasses fully-collimated light rays as well as near-collimated light rays. By "near-collimated light rays", it means that an angle formed by such light rays with respect to a predefined direction of collimation is less than a predefined angle. This predefined angle may, for example, lie within a range of 10 degrees to 30 degrees.

Due to the inherent collimated nature of the light rays emitted by the at least one laser light source, it may be difficult for the display device and the system to create a relatively large viewing zone without any additional optical element. The term "viewing zone" refers to a 3D zone within which a user's eyes can be positioned to see the image clearly. Optionally, in this regard, the system further comprises an optical spreader arranged on the optical path of the display device, wherein the optical spreader is employed to spread individual ones of the light rays. A technical benefit of employing the optical spreader is that it allows for expanding the viewing zone of the display device.

The optical spreader can be implemented as a light diffuser or a similar optical element that is configured to spread light. In some implementations, the optical spreader can be implemented as a part of the display device. In other implementations, the optical spreader can be implemented as a separate element.

Optionally, the optical spreader is arranged between the display device and the multiscopic optical element. A technical benefit of this is that spreading of the light rays (by the optical spreader) in such an arrangement does not interfere with the parallax effect created by the multiscopic optical element.

The optical spreader can be beneficially designed to have a high transmittance, thereby allowing for reduction in light wastage. The technical effect of high transmittance can be achieved by implementing the optical spreader in various possible ways. As an example, the optical spreader can be implemented as a light diffuser having a plurality of micro lenses on a surface of the light diffuser. In such a case, the plurality of micro lenses are shaped depending on the diffusion angle. In this regard, a given micro lens is shaped to bend light rays incident thereupon according to the diffusion angle and a location of the given micro lens in the light diffuser. Notably, an angle of bending varies across the light diffuser, such that the angle of bending is larger for those micro lenses that lie in a proximity of a periphery of the light diffuser as compared to other micro lenses that lie in a central portion of the light diffuser.

Moreover, the light rays emitted by adjacent regions of the display device are diffused in a manner that they do not overlap with each other upon diffusion.

The present disclosure further relates to the method as described above. Various embodiments and variants disclosed above, with respect to the aforementioned first aspect, apply *mutatis mutandis* to the method.

Optionally, in the method, the active panel further comprises a colour filter array comprising colour filters of at least three different colours. Additionally or alternatively, optionally, the at least one laser light source is controlled, based on colour values of the given pixel or the neighbouring pixels of the given group in the image, to emit the light rays having the colour values of the given pixel or the neighbouring pixels of the given group. A technical benefit of emitting the light rays having the colour values as an alternative to the CFA is that the light rays can have a maximum possible light intensity. On the other hand, a technical benefit of emitting the light rays having the colour values in addition to employing the CFA is that the colour filters of the CFA can be used to fine tune colour reproduction.

Optionally, in the method, the at least one light guide comprises a plurality of light guides, and the at least one laser light source comprises a plurality of laser light sources corresponding to respective ones of the plurality of light guides, wherein a light inlet of each light guide is arranged to receive light rays emitted by a corresponding laser light source, and a light outlet of said light guide is arranged to send the light rays towards a corresponding portion of the inlet surface of the active panel. This allows to perform the aforementioned steps (i) to (iv) for multiple pixels or multiple groups of neighbouring pixels of the image simultaneously. As a result, the image can be displayed relatively quickly, thereby allowing for higher frame rates. This immensely improves the user's viewing experience by making the visual scene more realistic and immersive.

Moreover, in some implementations, the at least one laser light source is configured to emit the light rays having a polarization orientation that is different from the polarization orientation of the linear polarizer. In such implementations, the aforesaid step (iv) of controlling the corresponding LC cell (or the corresponding group of neighbouring LC cells) to modulate the intensity of the light rays is performed by taking into consideration a difference between the polarization orientation of the light rays and the polarization orientation of the linear polarizer.

In other implementations, the active panel further comprises another linear polarizer having another polarization orientation that is different from the polarization orientation of the linear polarizer, and wherein the LC layer is arranged between the linear polarizer and the another linear polarizer. Accordingly, in such implementations, the aforesaid step (iv) is performed by taking into consideration a difference between the another polarization orientation of the another linear polarizer and the polarization orientation of the linear polarizer.

Furthermore, optionally, the method further comprises employing an optical combiner, arranged on an optical path of the display device and on an optical path of a real-world light field of a real-world environment, to reflect the synthetic light field towards eyes of at least one user, whilst optically combining the real-world light field with the synthetic light field.

Optionally, the method further comprises:

determining a relative location of a first eye and of a second eye of the at least one user with respect to the optical combiner, wherein the image is a light field image that is generated or retrieved based on the relative location of the first eye and of the second eye of the at least one user with respect to the optical combiner; and

controlling the multiscopic optical element arranged on the optical path of the display device, based on the relative location of the first eye and of the second eye of the at least one user with respect to the optical combiner, to direct light rays corresponding to a first set of pixels and a second set of pixels of the light field image to produce a first part and a second part of the synthetic light field, respectively, for the first eye and the second eye of the at least one user.

Moreover, optionally, the method further comprises employing an optical spreader, arranged on an optical path of the display device, to spread individual ones of the light rays. A technical benefit of employing the optical spreader is that it allows for expanding the viewing zone of the display device.

DETAILED DESCRIPTION OF THE DRAWINGS

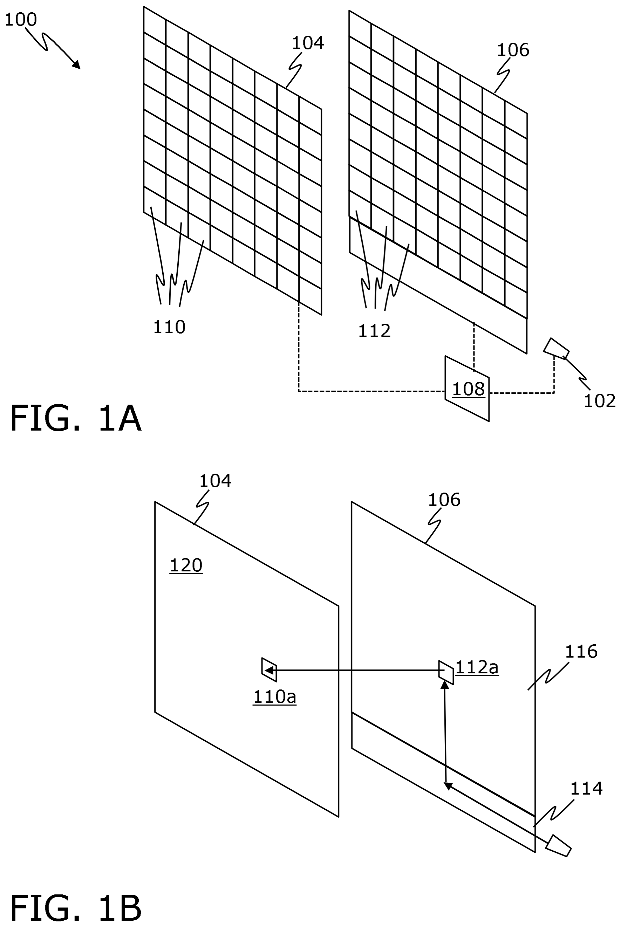

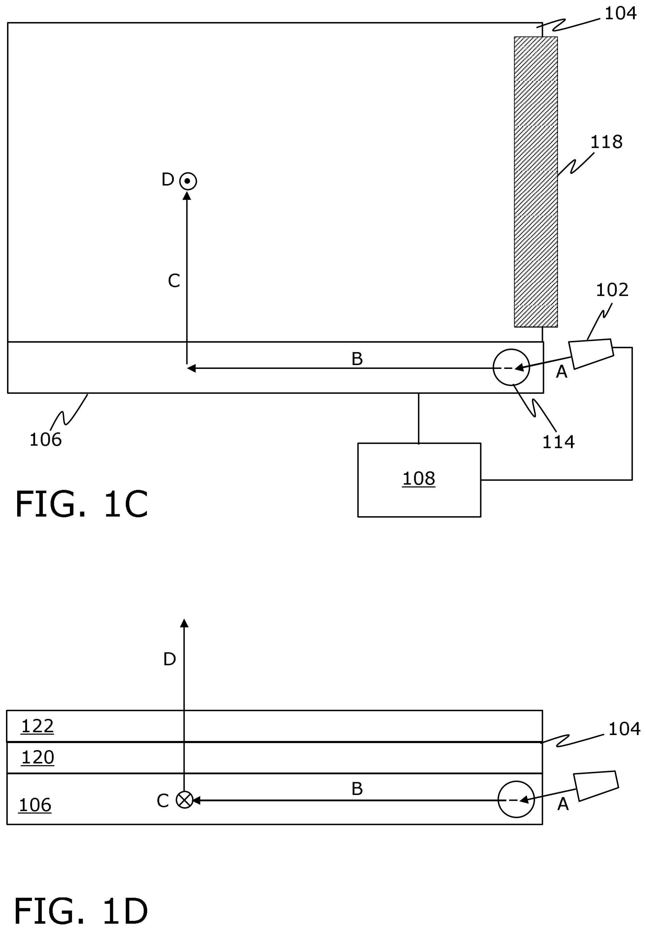

FIGs. 1A and 1B are simplified exploded views of a display device 100, while FIGs. 1C and 1D are a front view and a bottom view of the display device 100, respectively, in accordance with an embodiment of the present disclosure. The display device 100 comprises at least one laser light source (depicted as a laser light source 102), an active panel 104, at least one light guide (depicted as a light guide 106), and a processor 108. The active panel 104 comprises a liquid crystal (LC) layer 120 comprising a plurality of LC cells 110, a linear polarizer 122 arranged on an optical path of the LC layer 120, and a drive circuit 118 employed to individually control the plurality of LC cells 110 of the LC layer 120. The light guide 106 comprises a light inlet 114 and a light outlet 116, the light outlet comprising a plurality of exit portions 112. The light inlet 114 is arranged to receive light rays emitted by the laser light source 102. The light guide 106 is controllable to sequentially guide the light rays towards different ones of the exit portions 112. The light outlet 116 is arranged to send the light rays towards an inlet surface of the active panel 104.

The processor 108 is configured to:

receive an image to be displayed via the display device 100; and

display the image via the display device 100 for producing a synthetic light field, wherein when displaying the image, the processor 108 is configured to display a given pixel or a given group of neighbouring pixels of the image by:

(i) determining a given exit portion 112a of the light outlet 116 corresponding to the given pixel or the given group of neighbouring pixels, based on a location of the given pixel or the given group of neighbouring pixels in the image;

(ii) controlling the laser light source **102** to emit light rays for the given pixel or the given group of neighbouring pixels in the image;

(iii) controlling the light guide **106** to guide the light rays towards the given exit portion **112a** from which the light rays exit towards a corresponding LC cell **110a** (or a corresponding group of neighbouring LC cells) of the LC layer **120** in the active panel **104;** and

(iv) controlling the corresponding LC cell **110a** (or the corresponding group of neighbouring LC cells) using the drive circuit **118** to modulate an intensity of the light rays passing therethrough, based on the polarization orientation of the linear polarizer.

With reference to FIG. 1B, 1C and 1D, there is shown using arrows how a light ray emitted by the laser light source **102** is directed by the light guide **106,** to exit the given exit portion **112a** of the light guide **106** towards the corresponding LC cell **110a** (or the corresponding group of neighbouring LC cells) of the active panel **104.** Different parts A, B, C and D of an optical path of the light ray are marked in FIGs. 1C and 1D.

The part **A** corresponds to an entry of the light ray (upon emission from the laser light source **102**) into the light guide **106** via the light inlet **114.** The parts **B** and **C** correspond to directing the light ray towards a given row (or a given column) of the light guide **106** on which the given exit portion **112a** lies, and guiding the light ray towards the given exit portion **112a.** The part **D** corresponds to re-directing the light ray to exit from the given exit portion **112a** of the light guide **106** towards the corresponding LC cell **110a** (or the corresponding group of neighbouring LC cells) of the active panel **104.**

Referring to FIG. 1E, illustrated is another implementation of the display device **100,** in accordance with an embodiment of the present disclosure. Optionally, in such an implementation, the at least one light guide comprises a plurality of light guides **106a-106d,** and the at least one laser light source comprises a plurality of laser light sources **102a-102d** corresponding to respective ones of the plurality of light guides **106a-106d.** A light inlet **114a-114d** of each light guide **106a-106d** is arranged to receive light rays emitted by a corresponding laser light source **102a-102d.** A light outlet **116a-116d** of each light guide **106a-106d** is arranged to send the light rays towards a corresponding portion of the inlet surface of the active panel **104.**

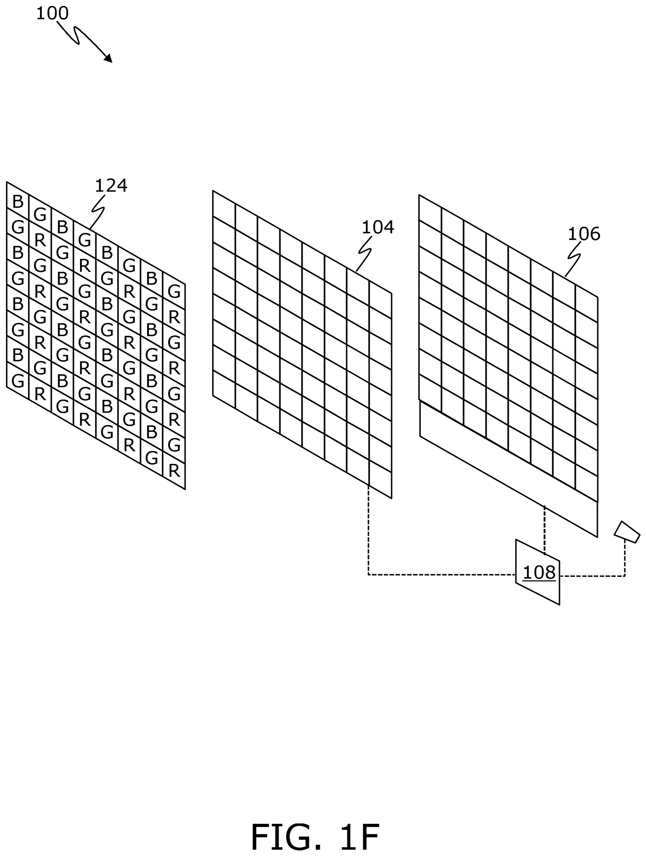

Referring next to FIG. 1F, illustrated is a specific implementation of the display device **100,** in accordance with an embodiment of the present disclosure. Optionally, in such an implementation, the display device **100** further comprises a colour filter array **124** comprising colour filters of at least three different colours. For illustration purposes only, the colour filters of the colour filter array **124** are shown as red, green and blue colour filters (marked with **R, G** and **B**).

It may be understood by a person skilled in the art that FIGs. 1A-1F merely depict various example implementations (out of many possible implementations) of the display device **100,** for sake of clarity, which should not unduly limit the scope of the claims herein. It is to be understood that the specific implementation of the display device **100** is not to be construed as limiting it to specific numbers or types of laser light sources, active panels, light guides, and processors. The person skilled in the art will recognize many variations, alternatives, and modifications of embodiments of the present disclosure.

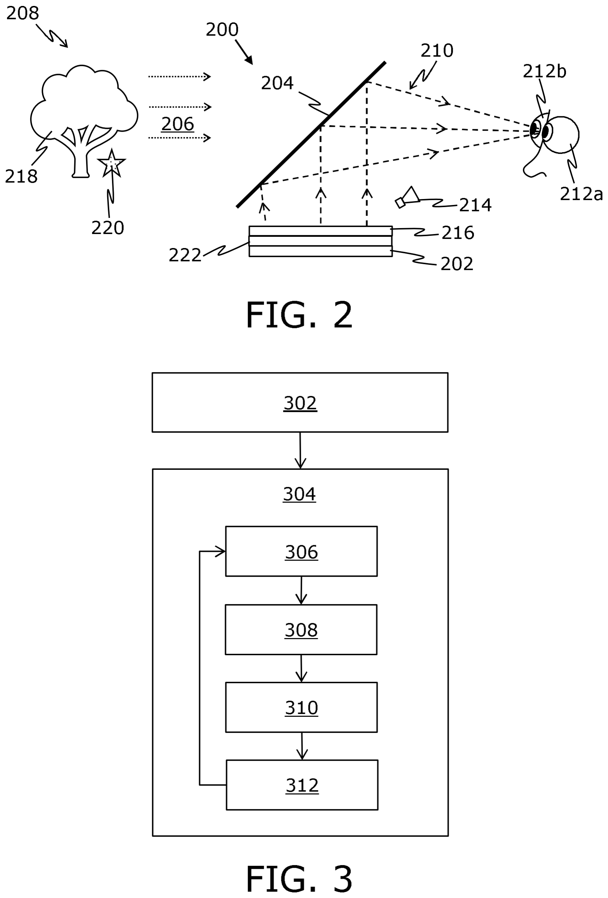

Referring to FIG. 2, illustrated is an exemplary environment in which a system **200** for displaying images can be employed, in accordance with an embodiment of the present disclosure. The system **200** comprises a display device **202** (according to the aforementioned first aspect), an optical combiner **204** and at least one processor (not shown). The optical combiner **204** is arranged on an optical path of the display device **202** and on an optical path of a real-world light field **206** of a real-world environment **208.** The at least one processor is configured to:

generate or retrieve an image to be displayed via the display device **202;** and

send the image to be displayed to the display device **202,**

wherein the display device **202** is employed to display the image for producing a synthetic light field **210,** and wherein the optical combiner **204** is employed to reflect the synthetic light field **210** towards eyes **212a-212b** of at least one user, whilst optically combining the real-world light field **206** with the synthetic light field **210.**

Moreover, optionally, the system **200** further comprises a tracker **214** and a multiscopic optical element **216** arranged on the optical path of the display device **202.** The at least one processor is configured to:

determine a relative location of a first eye **212a** and of a second eye **212b** of the at least one user with respect to the optical combiner **204,** by utilising the tracker **214,** wherein the image is a light field image that is generated or retrieved based on the relative location of the first eye **212a** and of the second eye **212b** of the at least one user with respect to the optical combiner **204;** and

control the multiscopic optical element **216,** based on the relative location of the first eye **212a** and of the second eye **212b** of the at least one user with respect to the optical combiner **204,** to direct light rays corresponding to a first set of pixels and a second set of pixels of the light field image to produce a first part and a second part of the synthetic light field **210,** respectively, for the first eye **212a** and the second eye **212b** of the at least one user.

In the real-world environment **208,** there are one or more real-world objects, depicted as a real-world object **218** (shown as a tree, for illustration purposes only). The first part and the second part of the synthetic light field **210** present at least one virtual object, depicted as a virtual object **220** (shown as a star, for illustration purposes only).

Furthermore, optionally, the system also comprises an optical spreader **222** arranged on the optical path of the display device **202,** wherein the optical spreader **222** is employed to spread individual ones of the light rays.

FIGs. 1A-1F and 2 are merely examples, which should not unduly limit the scope of the claims herein. A person skilled in the art will recognize many variations, alternatives, and modifications of embodiments of the present disclosure.

Referring to FIG. 3, illustrated are steps of a method for displaying images, in accordance with an embodiment of the present disclosure. At step **302,** an image to be displayed via a display device is received. The display device comprises at least one laser light source, an active panel and at least one light guide. The active panel comprises a liquid crystal (LC) layer comprising a plurality of LC cells, a linear polarizer arranged on an optical path of the LC layer, and a drive circuit employed to individually control the plurality of LC cells of the LC layer. The at least one light guide comprises a light inlet and a light outlet, the light outlet comprising a plurality of exit portions, the light inlet being arranged to receive light rays emitted by the at least one laser light source, wherein the at least one light guide is controllable to sequentially guide the light rays towards different exit portions of the light outlet, the light outlet being arranged to send the light rays towards an inlet surface of the active panel.

At step **304,** the image is displayed via the display device for producing a synthetic light field. The step **304** comprises steps **306, 308, 310** and **312.** At step **306,** a given exit portion of the light outlet corresponding to a given pixel or a given group of neighbouring pixels is determined, based on a location of the given pixel or the given group of neighbouring pixels in the image. At step **308,** the at least one laser light source is controlled to emit light rays for the given pixel or the given group of neighbouring pixels in the image. At step **310,** the at least one light guide is controlled to guide the light rays towards the given exit portion from which the light rays exit towards a corresponding LC cell or a corresponding group of neighbouring LC cells of the LC layer in the active panel. At step **312,** the corresponding LC cell or the corresponding group of neighbouring LC cells is controlled using the drive circuit to modulate an intensity of the light rays passing therethrough, based on the polarization orientation of the linear polarizer. The steps **306, 308, 310** and **312** are repeated for individual ones of a plurality of pixels or a plurality of groups of neighbouring pixels of the image.

The aforementioned steps are only illustrative and other alternatives can also be provided where one or more steps are added, one or more steps are removed, or one or more steps are provided in a different sequence without departing from the scope of the claims herein.

**Claims**

**1.** A display device (100, 202) comprising:

at least one laser light source (102);
an active panel (104) comprising:

a liquid crystal (LC) layer comprising a plurality of LC cells (110);
a linear polarizer (122) arranged on an optical path of the LC layer; and
a drive circuit (118) employed to individually control the plurality of LC cells of the LC layer;

at least one light guide (106) comprising a light inlet (114) and a light outlet (116), the light outlet comprising a plurality of exit portions (112), wherein the light inlet is arranged to receive light rays emitted by the at least one laser light source, wherein the at least one light guide is controllable to sequentially guide the light rays towards different exit portions of the light outlet, and the light outlet is arranged to send the light rays towards an inlet surface of the active panel; and
a processor (108) configured to:

receive an image to be displayed via the display device; and
display the image via the display device for producing a synthetic light field (210), wherein when displaying the image, the processor is configured to display a given pixel or a given group of neighbouring pixels of the image by:

(i) determining a given exit portion (112a) of the light outlet corresponding to the given pixel or the given group of neighbouring pixels, based on a location of the given pixel or the given group of neighbouring pixels in the image;

(ii) controlling the at least one laser light source to emit light rays for the given pixel or the given group of neighbouring pixels in the image;

(iii) controlling the at least one light guide to guide the light rays towards the given exit portion from which the light rays exit towards a corresponding LC cell (110a) or a corresponding group of neighbouring LC cells of the LC layer in the active panel; and

(iv) controlling the corresponding LC cell or the corresponding group of neighbouring LC cells using the drive circuit to modulate an intensity of the light rays passing therethrough, based on a polarization orientation of the linear polarizer.

2. The display device (100, 202) of claim 1, wherein the active panel (104) further comprises a colour filter array (124) comprising colour filters of at least three different colours.

3. The display device (100, 202) of any of the preceding claims, wherein the at least one laser light source (102) is controlled, based on colour values of the given pixel or the neighbouring pixels of the given group in the image, to emit the light rays having the colour values of the given pixel or the neighbouring pixels of the given group.

4. The display device (100, 202) of any of the preceding claims, wherein the at least one light guide (106) comprises a plurality of light guides (106a-106d), and the at least one laser light source (102) comprises a plurality of laser light sources (102a-102d) corresponding to respective ones of the plurality of light guides,

wherein a light inlet (114a-114d) of each light guide is arranged to receive light rays emitted by a corresponding laser light source, and a light outlet (116a-116d) of said light guide is arranged to send the light rays towards a corresponding portion of the inlet surface of the active panel (104).

5. The display device (100, 202) of any of the preceding claims, wherein the active panel (104) further comprises another linear polarizer (122) having another polarization orientation that is different from the polarization orientation of the linear polarizer, and wherein the LC layer is arranged between the linear polarizer and the another linear polarizer.

6. The display device (100, 202) of any of claims 1-4, wherein the at least one laser light source (102) is configured to emit the light rays having a polarization orientation that is different from the polarization orientation of the linear polarizer.

7. A system (200) comprising:

a display device (100, 202) of any of the preceding claims;
an optical combiner (204) arranged on an optical path of the display device and on an optical path of a real-world light field (206) of a real-world environment (208); and
at least one processor (108) configured to:

generate or retrieve an image to be displayed via the display device; and
send the image to be displayed to the display device,

wherein the display device is employed to display the image for producing a synthetic light field (210), and wherein the optical combiner (204) is employed to reflect the synthetic light field towards eyes (212a-212b) of at least one user, whilst optically combining the real-world light field with the synthetic light field.

8. The system (200) of claim 7, further comprising a tracker (214) and a multiscopic optical element (216) arranged on the optical path of the display device (100, 202), wherein the at least one processor (108) is configured to:

determine a relative location of a first eye (212a) and of a second eye (212b) of the at least one user with respect to the optical combiner (204), by utilising the tracker, wherein the image is a light field image that is generated or retrieved based on the relative location of the first eye and of the second eye of the at least one user with respect to the optical combiner; and
control the multiscopic optical element, based on the relative location of the first eye and of the second eye of the at least one user with respect to the optical combiner, to direct light rays corresponding to a first set of pixels and a second set of pixels of the light field image to produce a first part and a second part of the synthetic light field (210), respectively, for the first eye and the second eye of the at least one user.

9. The system (200) of claim 7 or 8, further comprising an optical spreader (222) arranged on the optical path of the display device (100, 202), wherein the optical spreader is employed to spread individual ones of the light rays.

10. A method comprising:

receiving an image to be displayed via a display device (100, 202), the display device comprising at least one laser light source (102), an active panel (104) and at least one light guide (106), wherein the active panel comprises a liquid crystal (LC) layer comprising a plurality of LC cells (110), a linear polarizer (122) arranged on an optical path of the LC layer, and a drive circuit (118) employed to individually control the plurality of LC cells of the LC layer, and wherein the at least one light guide comprises a light inlet (114) and a light outlet (116), the light outlet comprising a plurality of exit portions (112), the light inlet being arranged to receive light rays emitted by the at least one laser light source, wherein the at least one light guide is controllable to sequentially guide the light rays towards different exit portions of the light outlet, the light outlet being arranged to send the light rays towards an inlet surface of the active panel; and

displaying the image via the display device for producing a synthetic light field (210), wherein the step of displaying the image comprises displaying a given pixel or a given group of neighbouring pixels of the image by:

(i) determining a given exit portion (112a) of the light outlet corresponding to the given pixel or the given group of neighbouring pixels, based on a location of the given pixel or the given group of neighbouring pixels in the image;
(ii) controlling the at least one laser light source to emit light rays for the given pixel or the given group of neighbouring pixels in the image;
(iii) controlling the at least one light guide to guide the light rays towards the given exit portion from which the light rays exit towards a corresponding LC cell (110a) or a corresponding group of neighbouring LC cells of the LC layer in the active panel; and
(iv) controlling the corresponding LC cell or the corresponding group of neighbouring LC cells using the drive circuit to modulate an intensity of the light rays passing therethrough, based on a polarization orientation of the linear polarizer.

11. The method of claim 10, wherein the at least one laser light source (102) is controlled, based on colour values of the given pixel or the neighbouring pixels of the given group in the image, to emit the light rays having the colour values of the given pixel or the neighbouring pixels of the given group.

12. The method of any of claims 10-11, wherein the at least one laser light source (102) is configured to emit the light rays having a polarization orientation that is different from the polarization orientation of the linear polarizer.

13. The method of any of claims 10-12, further comprising employing an optical combiner (204), arranged on an optical path of the display device (100) and on an optical path of a real-world light field (206) of a real-world environment (208), to reflect the synthetic light field (210) towards eyes (212a-212b) of at least one user, whilst optically combining the real-world light field with the synthetic light field.

14. The method of claim 13, further comprising:

determining a relative location of a first eye (212a) and of a second eye (212b) of the at least one user with respect to the optical combiner (204), wherein the image is a light field image that is generated or retrieved based on the relative location of the first eye and of the second eye of the at least one user with respect to the optical combiner; and

controlling the multiscopic optical element (216) arranged on the optical path of the display device, based on the relative location of the first eye and of the second eye of the at least one user with respect to the optical combiner (204), to direct light rays corresponding to a first set of pixels and a second set of pixels of the light field image to produce a first part and a second part of the synthetic light field (210), respectively, for the first eye and the second eye of the at least one user.

15. The method of any of claims 10-14, further comprising employing an optical spreader (222), arranged on an optical path of the display device, to spread individual ones of the light rays.

100

104

106

110

112

108

102

**FIG. 1A**

104

106

120

116

110a

112a

114

**FIG. 1B**

FIG. 1C

FIG. 1D

FIG. 1E

FIG. 1F

FIG. 2

FIG. 3

## EUROPEAN SEARCH REPORT

Application Number

EP 26 15 2618

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/160539 A1 (JIANG YURUI [CN] ET AL) 8 June 2017 (2017-06-08) | 1-3,5, 7-11, 13-15 | INV. G02F1/1335 G02F1/13357 |
| A | * paragraphs [0003] - [0042]; figures 2,3 * | 4,6,12 | |
| | ----- | | |
| Y | US 2016/231497 A1 (KATO HIROFUMI [JP]) 11 August 2016 (2016-08-11) | 1-3,5,10 | |
| A | * paragraphs [0040] - [0073]; figures 1-3 * | 4,6-9, 11-15 | |
| | ----- | | |
| Y | US 2019/162960 A1 (HARADA TSUTOMU [JP] ET AL) 30 May 2019 (2019-05-30) | 7-9,11, 13-15 | |
| A | * paragraphs [0019] - [0058]; figures 1-6 * | 1-6,10, 12 | |
| | ----- | | |

TECHNICAL FIELDS SEARCHED (IPC)

G02F

The present search report has been drawn up for all claims

| Place of search | Date of completion of the search | Examiner |
|---|---|---|
| Munich | 27 May 2026 | Kiernan, Laurence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 2618

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | | Publication date |
|---|---|---|---|---|
| US 2017160539 A1 | 08-06-2017 | CN | 104965348 A | 07-10-2015 |
| | | US | 2017160539 A1 | 08-06-2017 |
| | | WO | 2017008339 A1 | 19-01-2017 |
| US 2016231497 A1 | 11-08-2016 | CN | 105866877 A | 17-08-2016 |
| | | KR | 20160097138 A | 17-08-2016 |
| | | TW | 201629596 A | 16-08-2016 |
| | | US | 2016231497 A1 | 11-08-2016 |
| US 2019162960 A1 | 30-05-2019 | JP | 2019101056 A | 24-06-2019 |
| | | US | 2019162960 A1 | 30-05-2019 |

EPO FORM P0459

For more details about this annex : see Official Journal of the European Patent Office, No. 12/82